# EUROPEAN PATENT APPLICATION

(11) **EP 1 104 148 A1**
(43) Date of publication of application: **30.05.2001**
(21) Application number: 99440328.5
(22) Date of filing: 29.11.1999
(51) Int. Cl.: H04M 1/57, H04M 1/82

(54) **Telephone or communication terminal with improved calling alert signal detection by using a notch filter**

(71) Applicant: ALCATEL, 75008 Paris (FR)
(72) Inventor: Wanner, Jean-Marc, 67550 Vendenheim (FR)
(74) Representative: Rausch, Gabriele, Dr.

(57) **Abstract**

The present invention concerns a telephone or communication terminal with improved calling alert signal detection.

Telephone or communication terminal comprising a receiving path and a sending path linked to the communication line, the receiving path being connected to a system able to detect, during a communication, a frequency based alert signal or CAS signal sent by the local telephone exchange station or central office upon any new call or connection request for the considered telephone or terminal and to allow reception by the latter of data related to each new caller, by interrupting temporarily the presently existing communication, characterised in that a notch filter (7), or several notch filters, centred on the frequency, or on the various frequencies, characterising the call alert signal is incorporated or mounted into the sending path (3) of the considered telephone or terminal (1).

## Description

The present invention relates generally to services in relation with communication via telephone networks, more particularly in relation with the service known as Caller Id on Call Waiting (CIDCW, CID type 2), especially on PSTN lines, and concerns a telephone or a similar communication terminal with improved calling alert signal (CAS) detection.

In telephone networks offering a Caller Id on Call Waiting or CIDCW service, the following steps are executed by the local telephone exchange station or central office and the considered telephone or similar communication terminal, upon arrival at said station or office of each new call or connection resquest from a new caller for said telephone or communication terminal while the latter is already engaged and in communication with a distant telephone or communication terminal of a calling or called user:
- the station or office mutes or cuts off the transmission from the engaged distant user;
- the station or office sends a call signal (SAS, generally at 440 Hz) and then a calling alert signal (CAS, generally a bi-frequency signal at 2130 Hz and 2750 Hz during 80 ms);
- the considered telephone or communication terminal detects the CAS signal, mutes its sending path and sends an acknowledgement signal (for example DTMF "D") back to the station or office;
- upon reception of the acknowledgement signal, the station or office transmits identification data (name, phone number, ...) concerning the new caller, which is stored and/or displayed by the considered telephone or communication terminal after setting its modem (for example V23 or Bell 202) into receiving mode;
- and finally the station or office suspends the cut off of transmission from the engaged distant user, the considered telephone or communication terminal demutes its sending path and the existing audio path is restored and the communication can be continued normally as before interruption.

The main difficulty encountered while providing this service is the reliability of the detection of the CAS signal, especially as CAS signals have to be detected while speech is present, i.e. while voice signals are exchanged between the two engaged telephones or similar terminals.

Indeed, speech can cause non detection of really existing CAS signals, but can also generate false detection, i.e. positive detection of non existing CAS signals.

Now, as the considered telephone or terminal has to mute its sending path and its receiving path (modem set into receiving mode) when it assumes to have detected a CAS signal, false detection has of course dramatical effects, by muting the conversation for seconds.

In order to verify the false detection rate of terminals, so-called "talkoff' and "talkdown" testings have been specified (see BELLCORE: GR30 core, SR-TSV-002476 and SR-3004) and, in order to keep false detection rates under bearable threshold values, high demanding criteria have been proposed as to reliability of CAS signal detection when mixed with speech, which are difficult to reach even with sophisticated detection systems.

A "talkoff" error occurs when the office or station has not sent any CAS signal while the telephone or terminal is convinced to have detected a CAS signal in the speech signal produced by the near end or local speaker (user of the local concerned telephone or terminal) or by the distant or far end user (user of the telephone or terminal in communication with the local user).

A "talkdown" error arises when the office or station has actually sent a CAS signal which is then not detected by the concerned telephone or terminal because, when detection is performed, it has been masked, distorted, interfered with or otherwise modified, mainly by the speech signal of the local user.

The disturbing influence of the speech signal produced by the local user on CAS signal detection is due to the attendant facts that, on the one hand, CAS signal detection is performed on signals transiting in the receiving path and that, on the other hand, at least a limited coupling always exists, and must exist, between sending path and receiving path which leads to injection of speech signals produced by the local user and transmitted from the sending path into the receiving path.

It is therefore a main object of the present invention to propose a simple and low cost solution which allows to decrease significantly the false detection rate of CAS signals, the said solution being able to be easily incorporated in the design of future telephones or similar communication terminals, but also in the structure of existing telephones or terminals, and added without interference to present solutions.

Accordingly, the present invention concerns a telephone or communication terminal comprising a receiving path and a sending path linked to the communication line, the receiving path being connected to a system able to detect, during a communication, a frequency based alert signal or CAS signal sent by the local telephone exchange station or central office upon any new call or connection request for the considered telephone or terminal and to allow reception by the latter of data related to each new caller, by interrupting temporarily the presently existing communication, characterised in that a notch filter, or several notch filters, centred on the frequency, or on the various frequencies, characterising the call alert signal is incorporated or mounted into the sending path of the considered telephone or terminal.

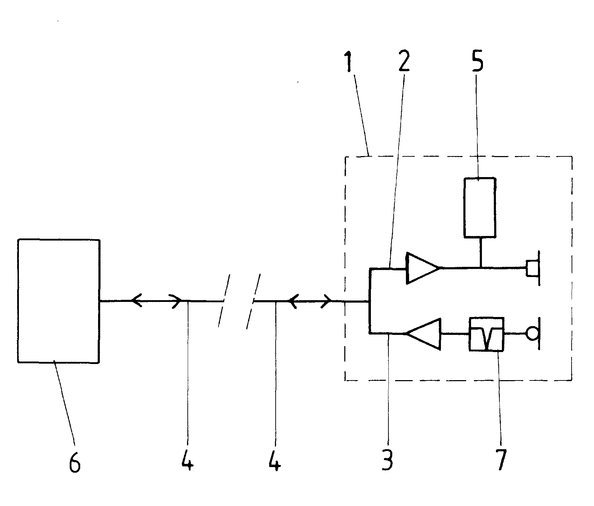

This invention will be better understood thanks to the following description and drawing of an embodiment of said invention given as non limitative example thereof, the figure of said drawing consisting of a partial shematic view of a telephone according to the present invention.

As shown on the enclosed figure, the telephone 1 comprises a receiving path 2 and a sending path 3 linked to the communication line 4, the receiving path 2 being connected to a system 5 able to detect, during a communication, a frequency based alert signal or CAS signal sent by the local telephone exchange station or central office 6 upon any new call or connection request for the considered telephone or terminal 1 from another distant caller and to allow reception by the latter of data related to each new caller, by interrupting temporarily the presently existing communication.

According to the invention, a notch filter 7, or several notch filters, centred on the frequency, or on the various frequencies, characterising the call alert signal is incorporated or mounted into the sending path 3 of the considered telephone or terminal 1.

The said notch filter 7 by suppressing the CAS signal frequency(ies) in the speech signal transmitted by sending path 3 and eliminating a main source of false CAS detection, naturally improves notably the overall degree of accurancy of CAS detection, whichever detection system or algorithm may be used.

In order to ensure that the invention is compatible with telephone sending response and has no audible effect neither for the local user nor for the distant user, the used notch filter 7 is preferably a high Q notch filter, centred on 2130 Hz and/or 2750 Hz and, for example, inserted in the sending path 3 before the 2/4 wires converter.

According to a first embodiment of the invention, the notch filter 7 is a hardware filter made of analogue electronic components.

According to a second embodiment of the invention, the notch filter 7 is a digital or software filter based on or supported by an adapted microprocessor, for example a digital signal processor.

It should be noted that the invention allows to improve even the best CAS signal detection system.

The present invention is, of course, not limited to the preferred embodiment described and represented herein, changes can be made or equivalents used without departing from the scope of the invention.

## Claims

1. Telephone or communication terminal comprising a receiving path and a sending path linked to the communication line, the receiving path being connected to a system able to detect, during a communication, a frequency based alert signal or CAS signal sent by the local telephone exchange station or central office upon any new call or connection request for the considered telephone or terminal and to allow reception by the latter of data related to each new caller, by interrupting temporarily the presently existing communication, characterised in that a notch filter (7), or several notch filters, centred on the frequency, or on the various frequencies, characterising the call alert signal is incorporated or mounted into the sending path (3) of the considered telephone or terminal (1).

2. Telephone or similar communication terminal according to claim 1, characterised in that the notch filter (7) is a high Q notch filter, centred on 2130 Hz and/or 2750 Hz.

3. Telephone or similar communication terminal, according to anyone of claims 1 and 2, characterised in that the notch filter (7) is a hardware filter made of analogue electronic components.

4. Telephone or similar communication terminal, according to anyone of claims 1 and 2, characterised in that the notch filter (7) is a digital or software filter based on or supported by an adapted microprocessor, for example a digital signal processor.
